# EUROPEAN PATENT SPECIFICATION

(11) **EP 3 840 426 B1**
(45) Date of publication and mention of the grant of the patent: **07.12.2022**
(21) Application number: 19872948.5
(22) Date of filing: 15.10.2019
(51) Int. Cl.: H04W 4/06, H04W 76/11, H04W 76/40

(54) **METHOD AND DEVICE FOR SENDING MULTICAST DATA**
VERFAHREN UND VORRICHTUNG ZUM SENDEN VON MULTICAST-DATEN
PROCÉDÉ ET DISPOSITIF D'ENVOI DE DONNÉES DE MULTIDIFFUSION

(30) Priority: 16.10.2018 CN 201811204975
(43) Date of publication of application: 23.06.2021
(73) Proprietor: Huawei Technologies Co., Ltd., Longgang Shenzhen, Guangdong 518129 (CN)
(72) Inventor: ZHU, Hualin, Shenzhen, Guangdong 518129 (CN); JIN, Weisheng, Shenzhen, Guangdong 518129 (CN)
(74) Representative: Pfenning, Meinig & Partner mbB
(86) International application number: PCT/CN2019/111154
(87) International publication number: WO 2020/078342

(56) References cited:
- EP-A2- 1 441 480
- WO-A1-2014/177194
- CN-A- 109 769 150
- CN-A- 110 012 437
- HUAWEI ET AL: "Update to Solution 15: Support of traffic routing in Backbone UP", 3GPP DRAFT; S2-1810787 SUPPORT OF TRAFFIC ROUTING IN BACKBONE UP - V10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. SA WG2, no. Dongguan, China; 20181015 - 20181019 9 October 2018 (2018-10-09), XP051539736, Retrieved from the Internet: URL:http://www.3gpp.org/ftp/tsg%5Fsa/WG2%5 FArch/TSGS2%5F129%5FDongguan/Docs/S2%2D181 0787%2Ezip [retrieved on 2018-10-09]
- HUAWEI: "Update to Solution 15: Support of traffic routing in Backbone UP", 3GPP TSG-SA WG2 Meeting #129, 9 October 2018 (2018-10-09), pages 2-1810787, XP051539736,
- HUAWEI: "Update to Solution 15: Support of traffic routing in Backbone UP", 3GPP TSG-SA WG2 Meeting #129, 19 October 2018 (2018-10-19), pages 2-1811344, XP051539911,
- HUAWEI: "Update to Solution 15", 3GPP TSG-SA WG2 Meeting #129Bis, S2-1812414, 30 November 2018 (2018-11-30), pages 2-1812414, XP051499117,

## Description

### TECHNICAL FIELD

This application relates to the communications field, and in particular, to a method and an apparatus for sending multicast data.

### BACKGROUND

Multicast communication is a communications technology that can save bandwidth. When sending data to a plurality of target devices located in a multicast group, a multicast source device transmits only one piece of data. After receiving the data, a transmission device (for example, a router) close to the target devices replicates the data and distribute the data to a plurality of terminals. Because only one piece of data is transmitted between the multicast source device and the transmission device, the multicast communication can save transmission bandwidth.

In a network combining a fixed network and a mobile network, the fixed network is usually used as a communication network between a multicast source device and a transmission device, and the mobile network is usually used as a communication network between a transmission device and terminals. In the fixed network, multicast data is still transmitted in a single piece, and is transmitted to terminals by using a communications device (that is, interworking equipment) at a junction between the mobile network and the fixed network. The foregoing interworking equipment is, for example, a user plane function (user plane function, UPF).

Document HUAWEI ET AL: "Update to Solution 15: Support of traffic routing in Backbone UP", 3GPP DRAFT; S2-1810787 SUPPORT OF TRAFFIC ROUTING IN BACKBONE UP - V10, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; vol. SA WG2, no. Dongguan, China; 20181015 -20181019, 9 October 2018 (2018-10-09), XP051539736, URL: http://www.3gpp.org/ftp/tsg%5Fsa/WG2%5FArch/TSGS2%5F129%5FDongguan/Docs/S2%2D1810787%2Ezip discloses a method for routing multicast data in a mobile network.

A difference between data transmission in the mobile network and data transmission in the fixed network is as follows: The transmission device in the fixed network usually forwards data hop by hop based on a destination address of the data, and after the data arrives at a transmission device closest to terminals, the data is directly forwarded by the transmission device to the terminals. However, a transmission mechanism of the mobile network becomes relatively complex due to mobility of terminals. After data arrives at the interworking device, the data needs to pass through data connections carried on a plurality of intermediate devices to arrive at the terminals. The data connections are dedicated data channels of the terminals. Therefore, one piece of multicast data needs to be replicated into a plurality of pieces of data at the interworking device, and the plurality of pieces of data are sent to the plurality of terminals through the data connections of the terminals. Consequently, the intermediate devices in the mobile network transmit a large amount of repeated multicast data. This causes a waste of transmission resources in the mobile network.

### SUMMARY

This application provides a method and an apparatus for sending multicast data according to the independent claims, to reduce redundant multicast data transmitted in a mobile network and avoid a waste of transmission resources in the mobile network.

According to a first aspect, a method for sending multicast data is provided. The method includes: A core network user plane network element establishes a plurality of data connections to a terminal. The core network user plane network element determines a first data connection, where the first data connection is a part of the plurality of data connections. The core network user plane network element receives multicast data sent to the terminal. The core network user plane network element sends the multicast data to an access network element only through the first data connection.

In a possible implementation, the core network user plane network element establishes a plurality of data connections to a plurality of terminals through one access network device.

The first data connection is a part of the plurality of data connections. The core network user plane network element sends the multicast data to the terminal through a part of the plurality of data connections. This reduces redundant multicast data transmitted in a core network, so that a waste of transmission resources is avoided.

In a possible implementation, that the core network user plane network element determines a first data connection includes: The core network user plane network element determines, based on identification information of the access network element, at least one data connection established through the access network element. The core network user plane network element determines the first data connection from the at least one data connection.

The core network user plane network element may determine, based on the identification information of the access network element, the at least one data connection established through one access network element, and select the first data connection from the at least one data connection to transmit the multicast data, so that another network element (for example, a core network control plane network element) does not need to select the first data connection. In this way, load of the another network element is alleviated.

In a possible implementation, that the core network user plane network element determines the first data connection from the at least one data connection includes: The core network user plane network element determines, from the at least one data connection, that the 1st data connection through which the terminal requests to receive the multicast data is the first data connection.

The foregoing solution is simple and easy to implement.

In a possible implementation, the method further includes: When the first data connection is deleted or deactivated, the core network user plane network element re-determines, from the at least one data connection, a data connection used to transmit the multicast data.

The foregoing solution can avoid interruption of multicast data transmission and improve reliability of the core network.

In a possible implementation, before the core network user plane network element determines, based on the identification information of the access network element, the at least one data connection established through the access network element, the method further includes: The core network user plane network element receives first control plane information from a core network control plane network element, where the first control plane information includes the identification information of the access network element and at least one of the following terminal information: an identifier ID of the terminal, an internet protocol IP address of the terminal, IDs of the plurality of data connections, and tunnel endpoint identifiers TEIDs of the plurality of data connections.

In a possible implementation, before the core network user plane network element receives the first control plane information from the core network control plane network element, the method further includes: The core network user plane network element sends first request information to the core network control plane network element, where the first request information is used to request identification information of a data connection associated with an access network element, or the first request information is used to request identification information of an access network element associated with a plurality of data connections.

In a possible implementation, before the core network user plane network element receives the first control plane information from the core network control plane network element, the method further includes: The core network user plane network element sends first user plane information to the core network control plane network element, where the first user plane information is used to request to receive the multicast data.

In a possible implementation, before the core network user plane network element determines, based on the identification information of the access network element, the at least one data connection established through the access network element, the method further includes: The core network user plane network element receives second user plane information from the access network element through the plurality of data connections, where the second user plane information includes the identification information of the access network element.

In a possible implementation, that the core network user plane network element determines a first data connection includes: The core network user plane network element receives second control plane information from a core network control plane network element, where the second control plane information is used to indicate the first data connection.

In the foregoing solution, the core network user plane network element does not need to select the first data connection. This alleviates load of the core network user plane network element.

In a possible implementation, before the core network user plane network element receives the second control plane information from the core network control plane network element, the method further includes: The core network user plane network element sends second request information to the core network control plane network element, where the second request information is used to request to obtain identification information of a data connection for transmitting the multicast data.

In a possible implementation, before the core network user plane network element receives the second control plane information from the core network control plane network element, the method further includes: The core network user plane network element sends first user plane information to the core network control plane network element, where the first user plane information is used to request to receive the multicast data.

In a possible implementation, the second control plane information includes indication information and at least one of the following terminal information: an ID of the terminal, an IP address of the terminal, IDs of the plurality of data connections, TEIDs of the plurality of data connections, and the indication information, where the indication information is used to indicate whether the multicast data is transmitted through a data connection for transmitting the terminal information.

In a possible implementation, the method further includes: The core network user plane network element receives the first user plane information, where the first user plane information is used to request to receive the multicast data. The core network user plane network element counts a data volume of the multicast data based on the first user plane information.

Although the core network user plane network element sends the multicast data through only a part of the plurality of data connections, based on the foregoing solution, the core network user plane network element can still determine a data volume of the multicast data received by each terminal, and a charging network element in a communications system may perform charging based on the data volume counted by the core network user plane network element. This reduces redundant multicast data transmitted in the core network and avoids impact on a charging function of the communications system.

According to a second example, a communication method is provided. The method includes: A core network control plane network element determines a plurality of data connections, where the plurality of data connections are connections that are established between a core network user plane network element and a terminal and that are used to transmit multicast data. The core network control plane network element determines, based on identification information of an access network element, at least one data connection from the plurality of data connections, where the at least one data connection corresponds to a same access network element. The core network control plane network element sends second control plane information to the core network user plane network element, where the second control plane information is used to indicate a first data connection in the at least one data connection.

The core network control plane network element indicates, based on the foregoing solution, the core network user plane network element (for example, a UPF) to send the multicast data to the terminal through a part of the plurality of data connections. This reduces redundant multicast data transmitted in a core network, so that a waste of transmission resources is avoided.

In a possible implementation, that the core network control plane network element sends second control plane information to the core network user plane network element includes: The core network control plane network element receives second request information from the core network user plane, where the second request information is used to request to obtain identification information of a data connection for transmitting the multicast data. The core network control plane network element sends the second control plane information to the core network user plane network element based on the second request information.

In a possible implementation, that the core network control plane network element sends second control plane information to the core network user plane network element includes: The core network control plane network element receives first user plane information from the core network user plane network element, where the first user plane information is used to request to receive the multicast data. The core network control plane network element sends the second control plane information to the core network user plane network element based on the first user plane information.

In a possible implementation, that the core network control plane network element determines, based on identification information of an access network element, at least one data connection from the plurality of data connections includes: The core network control plane network element receives, from an access management network element, the identification information of the access network element and at least one of the following terminal information: an ID of the terminal, an IP address of the terminal, IDs of the plurality of data connections, and TEIDs of the plurality of data connections. The core network control plane network element determines the at least one data connection based on the identification information of the access network element and the at least one of the terminal information.

In a possible implementation, before the core network control plane network element determines, based on the identification information of the access network element, the at least one data connection from the plurality of data connections, the method further includes: The core network control plane network element receives second user plane information from the access management network element or the core network user plane network element, where the second user plane information includes the identification information of the access network element.

In a possible implementation, the method further includes: When the first data connection is deleted or deactivated, the core network control plane network element re-determines, from the at least one data connection, a data connection used to transmit the multicast data.

The foregoing solution can avoid interruption of multicast data transmission and improve reliability of the core network.

In a possible implementation, the method further includes: The core network control plane network element receives the first user plane information, where the first user plane information is used to request to receive the multicast data. The core network control plane network element counts, based on the first user plane information, a data volume of the multicast data sent to each terminal.

Although the core network user plane network element sends the multicast data through only a part of the plurality of data connections, based on the foregoing solution, the core network control plane network element can determine the data volume of the multicast data received by each terminal, and a charging network element in a communications system may perform charging based on the data volume counted by the core network control plane network element. This reduces redundant multicast data transmitted in the core network and avoids impact on a charging function of the communications system.

According to a third example, another communication method is provided. The method includes: A core network control plane network element determines a first data connection, where the first data connection belongs to a plurality of data connections established between a core network user plane network element and a terminal, and the first data connection is used to send multicast data of the terminal to an access network device. The core network control plane network element sends information about the first data connection to the core network user plane network element.

According to a fourth aspect, this application provides an apparatus for sending multicast data. The apparatus may implement functions corresponding to the steps in the method in the first aspect. The functions may be implemented by hardware, or may be implemented by hardware executing corresponding software. The hardware or the software includes one or more units or modules corresponding to the foregoing functions.

In a possible design, the apparatus includes a processor. The processor is configured to support the apparatus in performing the corresponding functions in the method in the first aspect. The apparatus may further include a memory. The memory is configured to be coupled to the processor and stores a program instruction and data that are necessary for the apparatus. The apparatus further includes a communications interface. The communications interface is configured to support communication between the apparatus and another network element.

According to a fifth aspect, this application provides a computer program product. The computer program product includes computer program code. When the computer program code is run by a processing unit of a core network device, the core network device is enabled to perform the method according to the first aspect.

According to a sixth aspect, this application provides a computer-readable storage medium. The computer-readable storage medium stores computer program code. When the computer program code is executed by a processing unit or a processor, the method according to the first aspect can be implemented.

According to a seventh example, a communications apparatus is provided. The apparatus may implement functions corresponding to the steps in the method in the second example. The functions may be implemented by hardware, or may be implemented by hardware executing corresponding software. The hardware or the software includes one or more units or modules corresponding to the foregoing functions.

In a possible design, the apparatus includes a processor. The processor is configured to support the apparatus in performing the corresponding functions in the method in the second example. The apparatus may further include a memory. The memory is configured to be coupled to the processor and stores a program instruction and data that are necessary for the apparatus. The apparatus further includes a communications interface. The communications interface is configured to support communication between the apparatus and another network element.

In a possible implementation, the apparatus includes a processing unit and a sending unit.

The processing unit is configured to: determine a plurality of data connections, where the plurality of data connections are connections that are established between a core network user plane network element and a terminal and that are used to transmit multicast data; and determine, based on identification information of an access network element, at least one data connection from the plurality of data connections, where the at least one data connection corresponds to a same access network element.

The sending unit is configured to send second control plane information to the core network user plane network element, where the second control plane information is used to indicate a first data connection in the at least one data connection.

In a possible implementation, the apparatus further includes a receiving unit.

The receiving unit is configured to receive second request information from the core network user plane, where the second request information is used to request to obtain identification information of a data connection for transmitting the multicast data.

The sending unit is specifically configured to send the second control plane information to the core network user plane network element based on the second request information.

In a possible implementation, the apparatus further includes a receiving unit.

The receiving unit is configured to receive first user plane information from the core network user plane network element, where the first user plane information is used to request to receive the multicast data.

The sending unit is specifically configured to send the second control plane information to the core network user plane network element based on the first user plane information.

In a possible implementation, the apparatus further includes a receiving unit.

The receiving unit is configured to receive, from an access management network element, the identification information of the access network element and at least one of the following terminal information:
an identifier ID of the terminal, an internet protocol IP address of the terminal, IDs of the plurality of data connections, and tunnel endpoint identifiers TEIDs of the plurality of data connections.

The processing unit is specifically configured to determine the at least one data connection based on the identification information of the access network element and the at least one of the terminal information.

In a possible implementation, the apparatus further includes a receiving unit, configured to:
receive second user plane information from an access management network element or the core network user plane network element, where the second user plane information includes the identification information of the access network element.

In a possible implementation, the processing unit is further configured to:
when the first data connection is deleted or deactivated, re-determine, from the at least one data connection, a data connection used to transmit the multicast data.

In a possible implementation, the apparatus further includes a receiving unit.

The receiving unit is configured to receive first user plane information, where the first user plane information is used to request to receive the multicast data.

The processing unit is further configured to count a data volume of the multicast data based on the first user plane information.

According to an eighth example, a computer program product is provided. The computer program product includes computer program code. When the computer program code is run by a processing unit of a core network device, the core network device is enabled to perform the method according to the second example.

According to a ninth example, a computer-readable storage medium is provided. The computer-readable storage medium stores computer program code. When the computer program code is executed by a processing unit or a processor, the method according to the second example can be implemented.

According to a tenth example, another communications apparatus is provided. The apparatus may implement functions corresponding to the steps in the method in the third example. The functions may be implemented by hardware, or may be implemented by hardware executing corresponding software. The hardware or the software includes one or more units or modules corresponding to the foregoing functions.

In a possible design, the apparatus includes a processor. The processor is configured to support the apparatus in performing the corresponding functions in the method in the third aspect. The apparatus may further include a memory. The memory is configured to be coupled to the processor and stores a program instruction and data that are necessary for the apparatus. The apparatus further includes a communications interface. The communications interface is configured to support communication between the apparatus and another network element.

According to an eleventh example, a computer program product is provided. The computer program product includes computer program code. When the computer program code is run by a processing unit of a core network device, the core network device is enabled to perform the method according to the third example.

According to a twelfth example, a computer-readable storage medium is provided. The computer-readable storage medium stores computer program code. When the computer program code is executed by a processing unit or a processor, the method according to the third example can be implemented.

### BRIEF DESCRIPTION OF DRAWINGS

FIG. 1 is a schematic diagram of a communications system applicable to this application;
FIG. 2 is a schematic diagram of a method for sending multicast data according to this application;
FIG. 3 is a schematic diagram of a session establishment method according to this application;
FIG. 4 is a schematic diagram of a method for obtaining identification information of an access network according to this application;
FIG. 5 is a schematic diagram of another method for obtaining identification information of an access network according to this application;
FIG. 6 is a schematic diagram of still another method for obtaining identification information of an access network according to this application;
FIG. 7 is a schematic diagram of still another method for obtaining identification information of an access network according to this application;
FIG. 8 is a schematic diagram of a session update method according to this application;
FIG. 9 is a schematic diagram of another method for sending multicast data according to this application;
FIG. 10 is a schematic diagram of an apparatus for sending multicast data according to this application;
FIG. 11 is a schematic diagram of another apparatus for sending multicast data according to this application;
FIG. 12 is a schematic diagram of still another apparatus for sending multicast data according to this application; and
FIG. 13 is a schematic diagram of still another apparatus for sending multicast data according to this application.

### DESCRIPTION OF EMBODIMENTS

To facilitate understanding of the technical solutions in this application, concepts in this application are first briefly described.

1. A terminal (terminal) may include various handheld devices, vehicle-mounted devices, wearable devices, or computing devices that have a wireless communication function, or another processing device connected to a wireless modem, and various forms of terminals, mobile stations (mobile station, MS), user equipment (user equipment, UE), soft terminals, home gateways, set-top boxes, and the like.

2. A (radio) access network ((radio) access network (R)AN) network element is configured to provide a network access function for an authorized terminal in a specific area, and can perform communication through transmission channels with different quality based on a terminal level, a service requirement, and the like.

The (R)AN network element can manage access network resources, provide an access service for a terminal, and further complete data transmission between the terminal and a core network. The (R)AN network element may be a base station defined in the 3rd generation partnership project (3^{rd} generation partnership project, 3GPP), or may be a non-3GPP (non-3GPP) access network or an access network in a fixed mobile convergence architecture, for example, an access gateway function (access gateway, AGF) or a fixed mobile interworking function (fixed mobile interworking function, FMIF). Any access network that accesses a core network of a mobile network belongs to the AN in this application.

3. A user plane network element is used for packet routing and forwarding, quality of service (quality of service, QoS) processing of user plane data, and the like.

In a 5th-generation (5^{th}-generation, 5G) communications system, the user plane network element is referred to as a UPF. In a future communications system, the user plane network element may still be referred to as a UPF, or may have another name. This is not limited in this application. Alternatively, the user plane network element may be a packet data network gateway (packet data network gateway, PDN-GW).

4. A data network element is configured to provide a network for data transmission, for example, configured to forward multicast data received from a fixed network to a terminal.

In a 5G communications system, the data network element is referred to as a data network (data network, DN). In a future communications system, the data network element may still be referred to as a DN, or may have another name. This is not limited in this application.

5. An access management network element is mainly configured to perform mobility management, access management, and the like. The access management network element may be configured to implement functions, for example, lawful interception and access authorization/authentication, other than session management in functions of a mobility management entity (mobility management entity, MME).

In a 5G communications system, the access management network element is referred to as an access and mobility management function (access and mobility management function, AMF). In a future communications system, the access management network element may still be referred to as an AMF, or may have another name. This is not limited in this application.

6. A session management network element is mainly configured to: manage a session, assign and manage an internet protocol (internet protocol, IP) address of a terminal device, select an endpoint that can manage a user plane function interface and a policy control and charging function interface, notify downlink data, and the like.

In a 5G communications system, the session management network element is referred to as a session management function (session management function, SMF). In a future communications system, the session management network element may still be referred to as an SMF, or may have another name. This is not limited in this application.

It may be understood that the foregoing network elements or functions may be network elements in a hardware device, software functions running on dedicated hardware, or virtualized functions instantiated on a platform (for example, a cloud platform).

In addition, a network element configured to manage a data connection may be referred to as a control plane (control plane) network element. For example, both the AMF and the SMF may be referred to as control plane network elements. Correspondingly, information generated by the control plane network element may be referred to as control plane information.

The following describes in detail the technical solutions in this application with reference to the accompanying drawings.

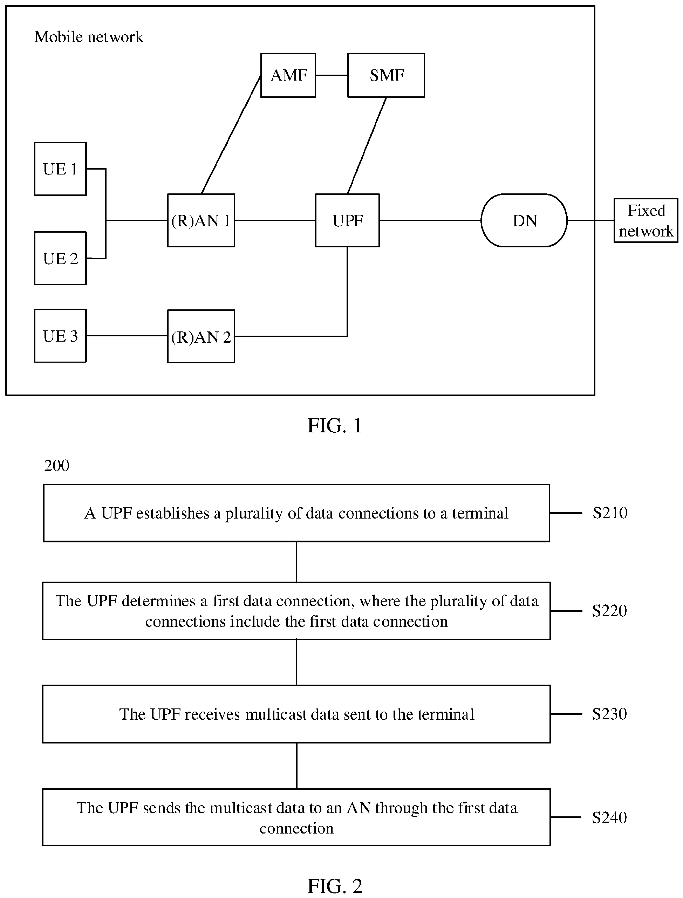

FIG. 1 is a schematic diagram of a communications system applicable to this application. The communications system includes a fixed network and a mobile network.

An optional definition of the fixed network is: a network that transmits data through a fixed media such as a metallic wire or an optical fiber. For example, a conventional Ethernet that performs communication through a cable, or a flexible Ethernet (flexible ethernet, FlexE) that performs communication through an optical fiber.

An optional definition of the mobile network is: a network that transmits data through electromagnetic waves, for example, a 5G communications system, a private network, a long term evolution (long term evolution, LTE) communications system, a multefire (multefire) communications system, a wireless-fidelity (wireless-fidelity, Wi-Fi) communications system, or a Bluetooth (Bluetooth) communications system.

The foregoing definitions of the fixed network and the mobile network are merely examples for description, to help readers more easily understand the technical solutions of this application, and should not be construed as a limitation on this application. For example, a future communications network is still applicable to the technical solutions of this application.

In the communications system shown in FIG. 1, the mobile network is a 5G communications system, and a DN is used as an interworking device between the fixed network and the mobile network to receive data from the fixed network and send the data to a UPF. The UPF establishes a data connection to each UE through an AN, and sends the data to each UE through the data connection. In the 5G communications system, the data connection is, for example, a protocol data unit (protocol data unit, PDU) session (session).

UE 1 is used as an example. When the UE 1 needs to receive multicast data, the UE 1 may send an internet group management protocol (internet group management protocol, IGMP) join message (IGMP join message) to an AN 1. In the following, the IGMP join message is referred to as an IGMP message for short. The IGMP message carries an identifier of a multicast group, and the identifier of the multicast group is, for example, a multicast address.

The AN 1 forwards the IGMP message to the UPF. After receiving the IGMP message sent by the UE 1, the UPF may determine that the UE 1 joins the multicast group corresponding to the multicast address. After receiving a multicast message corresponding to the multicast address from the fixed network, the UPF may send the multicast message corresponding to the multicast address to the UE 1 through a data connection to the UE 1.

An AMF and an SMF are configured to maintain a data connection between the AN 1 and the UPF. A network between the AN and the DN may be referred to as a core network.

The foregoing communications system is merely an example for description, and a communications system applicable to this application is not limited thereto.

The following uses the communications system shown in FIG. 1 as an example to describe a method for sending multicast data provided in this application.

FIG. 2 is a schematic diagram of a method for sending multicast data according to this application. The method 200 includes the following steps.

S210. A UPF establishes a plurality of data connections to a terminal.

The terminal may be one UE, or may be a plurality of UEs.

When the terminal is one UE, the UPF may establish a plurality of data connections to the UE through two or more ANs. When the terminal is a plurality of UEs, the UPF may establish a plurality of data connections to the plurality of UEs through one or more ANs. For a specific method for establishing the data connections between the UPF and the terminal, refer to a data connection establishment method in the conventional technology. For brevity, details are not described herein.

S220. The UPF determines a first data connection, where the plurality of data connections include the first data connection.

The first data connection is one or more of the plurality of data connections, and a quantity of first data connections is less than a quantity of the plurality of data connections in S210.

For example, UE 1 and UE 2 are currently in a same multicast group, and the UPF establishes one PDU session with each of the UE 1 and the UE 2. The first data connection may be a PDU session between the UPF and the UE 1, or may be a PDU session between the UPF and the UE 2.

For another example, UE 1, UE 2, and UE 3 are currently in a same multicast group, and the UPF establishes one PDU session with each of the UE 1, the UE 2, and the UE 3. The first data connection may be a PDU session between the UPF and the UE 1 and a PDU session between the UPF and the UE 3, or may be a PDU session between the UPF and the UE 2 and a PDU session between the UPF and the UE 3.

For another example, UE 1 and UE 2 are currently in a same multicast group, and the UPF establishes two flows (flow) with each of the UE 1 and the UE 2. The first data connection may be two flows between the UPF and the UE 1, or may be two flows between the UPF and the UE 2.

S230. The UPF receives multicast data sent to the terminal.

The UPF may determine, based on an IGMP message received from the terminal, the multicast data sent to the terminal. If a multicast address of multicast data received by the UPF from a DN is the same as a multicast address carried in the IGMP message, the UPF determines that the multicast data is the multicast data sent to the terminal.

S240. The UPF sends the multicast data to an AN through the first data connection.

Because the first data connection is carried on the AN, the UPF needs to send the multicast data to the AN, so that the AN forwards the multicast data to the terminal. For example, after receiving the multicast data by using a PDU session of the UE 1, an AN 1 may replicate the multicast data, and send the replicated multicast data to the UE 2.

In the method 200, the UPF sends the multicast data to the terminal through a part of the plurality of data connections. This reduces redundant multicast data transmitted in a core network, so that a waste of transmission resources is avoided.

In the method 200, a sequence of performing S220 and S230 may be exchanged, to be specific, the UPF may first receive the multicast data, and then determine the first data connection.

In addition, a specific manner of determining the first data connection by the UPF is not limited in this application. For example, the UPF may determine, based on information obtained from another network element, the first data connection from the plurality of data connections (that is, an active selection solution), or may determine, based on an indication of another network element, the first data connection from the plurality of data connections (that is, a passive acceptance solution). The following describes, from the two aspects, a method for determining the first data connection by the UPF.

First, the active selection solution of the UPF is described.

In an optional example, S220 includes:

The UPF determines, based on identification information of an AN, at least one data connection established through the AN.

The UPF determines the first data connection from the at least one data connection.

In the foregoing solution, the UPF classifies at least one data connection corresponding to identification information of a same AN into one group, and selects one or a few data connections from the at least one data connection as the first data connection. Because the AN can replicate multicast data, and send the multicast data to a terminal within a coverage area of the AN, the foregoing solution can meet a multicast transmission requirement, and reduce redundant multicast data transmitted in the core network.

The UPF may determine the first data connection from the at least one data connection according to the following rules:
a random policy, a preset policy, QoS, or the 1st connection that is in the at least one data connection and through which the terminal requests to receive the multicast data.

FIG. 1 is used as an example. The UPF establishes one PDU session with each of the UE 1 and the UE 2, to be specific, the UPF establishes a session 1 with the UE 1, and the UPF establishes a session 2 with the UE 2.

In this case, the UPF may randomly select a session from the session 1 and the session 2 as the first data connection.

Alternatively, the UPF may determine the first data connection according to the preset policy. For example, a session with a smaller identifier value (that is, the session 1) is selected as the first data connection.

The UPF may further select, from the session 1 and the session 2, a session with better QoS as the first data connection.

The UPF may further select, as the first data connection, the 1st connection through which the terminal requests to receive the multicast data. For example, the UPF first receives, by using the session 2, an IGMP message that includes a multicast address A, and then receives, by using the session 1, an IGMP message that includes the multicast address A. In this case, the UPF may use the session 2 as the first data connection, send multicast data corresponding to the multicast address A to the AN 1 by using the session 2, and no longer send the multicast data to the UE 1 by using the session 1. Instead, the AN 1 replicates the multicast data received by using the session 2, and then forwards the replicated multicast data to the UE 1.

The identification information of the AN may be a device identifier (identifier, ID) of the AN, or may be a device IP address of the AN, or may be other information used to identify the AN. For example, the AN 1 corresponds to three virtual local area networks (virtual local area network, VLAN), which are a VLAN 1, a VLAN 2, and a VLAN 3. An AN 2 corresponds to two VLANs, which are a VLAN 4 and a VLAN 5. If the UPF receives an IGMP message that carries the VLAN 1 and an IGMP message that carries the VLAN 2, the UPF may determine that terminals sending the two IGMP messages correspond to a same AN. If the UPF receives an IGMP message that carries the VLAN 1 and an IGMP message that carries the VLAN 4, the UPF may determine that terminals sending the two IGMP messages correspond to different ANs.

The foregoing explanations of the identification information of the AN are applicable to all the embodiments of this application.

A method for obtaining the identification information of the AN by the UPF is not limited in this application. The following several methods for obtaining the identification information of the AN by the UPF are merely examples for description.

Method 1: The UPF obtains the identification information of the AN by using control plane information.

Before the UPF determines, based on the identification information of the AN, the at least one data connection established through the AN, the method 200 further includes:
The UPF receives first control plane information from an SMF, where the first control plane information includes the identification information of the AN and at least one of the following terminal information:
an ID of the terminal, an IP address of the terminal, IDs of the plurality of data connections in S210, and tunnel endpoint identifiers (tunnel endpoint ID, TEID) of the plurality of data connections.

The SMF is a manager of a data connection, and the SMF stores a correspondence between an AN and each data connection. The SMF may send the identification information of the AN and the foregoing terminal information to the UPF, to indicate an association relationship between the AN and the data connection to the UPF.

In this embodiment of this application, in a possible implementation, the association relationship between an AN and a data connection means that the terminal establishes the data connection through the AN.

For example, the first control plane information includes: the identification information of the AN is the AN 1, IDs of terminals are the UE 1 and the UE 2, a data connection of the UE 1 is a PDU session 1, and a data connection of the UE 2 is a PDU session 2. After receiving the first control plane information, the UPF determines that data connections corresponding to the AN 1 are the PDU session 1 and the PDU session 2. In other words, after receiving the first control plane information, the UPF determines that an AN corresponding to the PDU session 1 and the PDU session 2 is the AN 1. In other words, the UPF determines, based on the first control plane information, an association relationship between the AN 1 and the PDU session 1 and an association relationship between the AN 1 and the PDU session 2.

It should be understood that the foregoing terminal information is merely an example for description, and any other information that can identify a data connection of the terminal may be referred to as terminal information.

In addition, a specific form of the first control plane information is not limited in this application. The first control plane information may be carried in a PDU session establishment message, or may be separately sent after a PDU session is established.

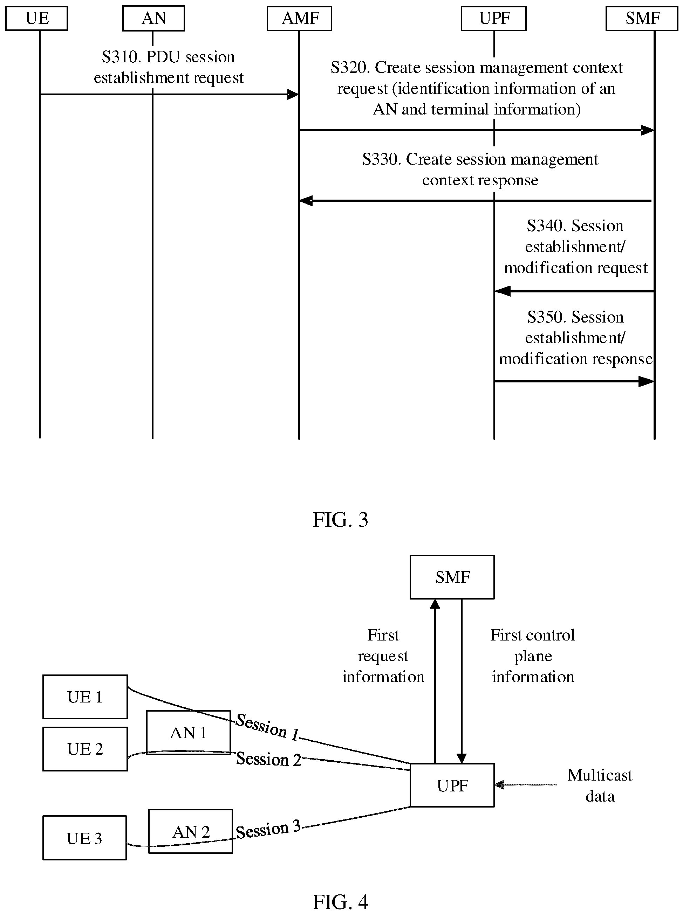

FIG. 3 is a schematic diagram of a method for sending the first control plane information according to this application. The method includes the following steps.

S310. UE sends a PDU session establishment request (PDU session establishment request) to an AMF, to request to establish a PDU session.

S320. The AMF sends a create session management context request (create SM context request) to the SMF.

S330. The AMF sends a create session management context response (create SM context response) to the SMF.

S340. The SMF sends a session establishment/modification request (session establish/modification request) to the UPF.

S350. The UPF sends a session establishment/modification response (session establish/modification response) to the SMF.

In the foregoing procedure, the SMF determines a correspondence between an AN and a PDU session by using the "create session management context request", and then may send, in S340 to the UPF, the "session establishment/modification request" that carries the terminal information and the identification information of the AN, to help the UPF to determine the association relationship between an AN and a PDU session, where the "session establishment/modification request" is the first control plane information.

The SMF may actively send the first control plane information to the UPF, or may send the first control plane information to the UPF based on request information or user plane information sent by the UPF.

In a possible implementation, before the UPF receives the first control plane information from the SMF, the method 200 further includes:
The UPF sends first request information to the SMF, where the first request information is used to request to obtain identification information of a data connection associated with an AN, or the first request information is used to request to obtain identification information of an AN associated with a plurality of data connections.

The UPF may send the first request information after receiving the multicast data. Alternatively, the UPF may send the first request information after receiving an IGMP message. The identification information of the data connection is, for example, the terminal information described above.

For example, as shown in FIG. 4, the UPF establishes a PDU session with each of UE 1, UE 2, and UE 3, that is, a session 1, a session 2, and a session 3. After receiving IGMP messages by using the session 1, the session 2, and the session 3, the UPF may request to obtain identification information of an AN associated with each of the session 1, the session 2, and the session 3, so as to determine an association relationship between an AN and a session.

For another example, as shown in FIG. 4, after receiving the multicast data, the UPF may request to obtain a PDU session associated with each of an AN 1 and an AN 2, so as to determine the association relationship between an AN and a session.

In a possible implementation, alternatively, the UPF may not send the first request information, but forwards specific user plane information to the SMF to determine the association relationship between an AN and a session. In other words, before the UPF receives the first control plane information from the SMF, the method 200 further includes:
The UPF sends first user plane information to the SMF, where the first user plane information is used to request to receive the multicast data.

The first user plane information is, for example, an IGMP message. After receiving the IGMP message, the UPF forwards the IGMP message to the SMF, and triggers the SMF to send the first control plane information (namely, the terminal information and the identification information of the AN) to the UPF.

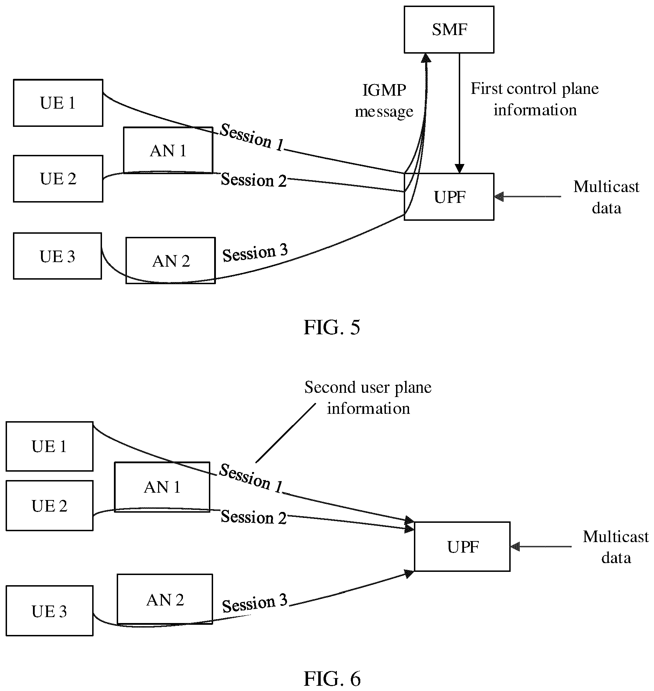

For example, as shown in FIG. 5, the UPF establishes a PDU session with each of UE 1, UE 2, and UE 3, that is, a session 1, a session 2, and a session 3. After receiving IGMP messages by using the session 1, the session 2, and the session 3, the UPF forwards the IGMP messages to the SMF. The SMF determines, based on the IGMP messages, that the UPF needs to forward the multicast data, and sends the first control plane information (namely, the terminal information and the identification information of the AN) to the UPF

In addition, for the SMF, FIG. 5 shows only that the SMF receives the first user plane information from the UPF. In a possible implementation, the SMF may further receive the first user plane information through the AMF, and send the first control plane information to the UPF based on the first user plane information received from the AMF. A manner of obtaining the first user plane information by the SMF is not limited in this application.

In the foregoing described embodiment, all the first control plane information includes the terminal information and the identification information of the AN. The first control plane information may include only the identification information of the AN, and the UPF determines, based on any piece of user plane information received from the AN, the association relationship between the AN and the data connection.

As shown in FIG. 6, a UPF connected to UE 1, UE 2, and UE 3 and the UPF that receives the multicast data are the same UPF. The UPF first obtains identification information of an AN 1 by using the "session establishment/modification request" in S340. Then, the UPF receives second user plane information from the AN 1 by using a session 1, and the UPF may determine an association relationship between the session 1 and the AN 1. The second user plane information is any piece of user plane information, and the second user plane information may be an IGMP message or another message.

The foregoing method is only used in a scenario in which the UPF that receives the multicast data is directly connected to the AN. If the UPF that receives the multicast data is not directly connected to the AN, the second user plane information needs to include the identification information of the AN.

The foregoing describes a method for determining the association relationship between the AN and the session by the UPF by using control plane information. Alternatively, the UPF may determine the association relationship between the AN and the session by using only user plane information.

Method 2: The UPF obtains the identification information of the AN by using the user plane information.

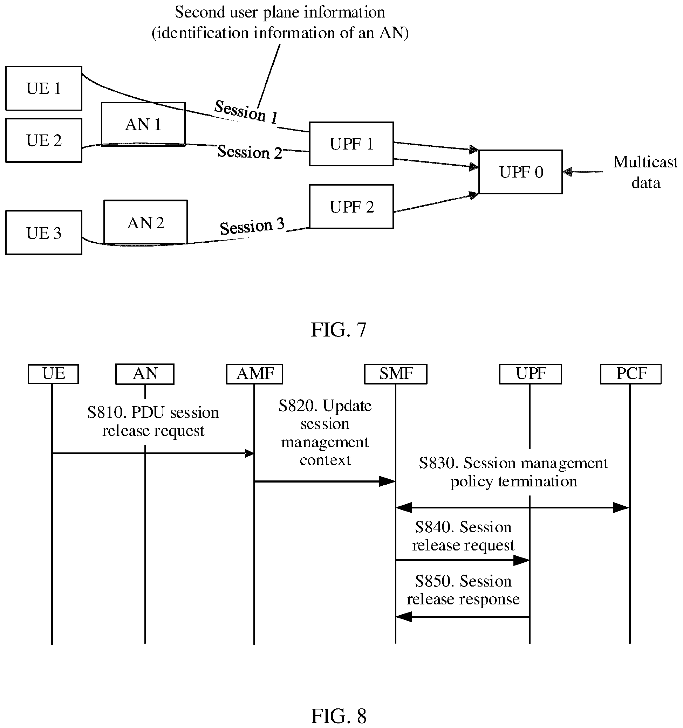

As shown in FIG. 7, a UPF connected to UE 1 and UE 2 is a UPF 1, a UPF connected to UE 3 is a UPF 2, and the UPF that receives the multicast data is a UPF 0. In this case, before the UPF 0 determines, based on the identification information of the AN, at least one data connection established through the AN, the method 200 further includes:
The UPF 0 receives second user plane information from the AN through the plurality of data connections in S210, where the second user plane information includes the identification information of the AN.

In the scenario shown in FIG. 7, the UPF 0 no longer obtains the identification information of the AN from a "session establishment/modification request", but obtains the identification information of the AN from the second user plane information. For example, the UPF 0 receives an IGMP message 1 by using a session 1, where the IGMP message 1 carries identification information of an AN 1. The UPF 0 receives an IGMP message 2 by using a session 2, where the IGMP message 2 carries the identification information of the AN 1. The UPF 0 receives an IGMP message 3 by using a session 3, where the IGMP message 3 carries identification information of an AN 2. In this case, the UPF 0 may determine that at least one data connection established through the AN 1 is the session 1 and the session 2, and determine that at least one data connection established through the AN 2 is the session 3. The UPF 0 may send the multicast data to the AN 1 by using the session 1 or the session 2, and send the multicast data to the AN 2 by using the session 3.

The method 2 is not only used in the indirect connection scenario shown in FIG. 7, but also used in the direct connection scenario shown in FIG. 6.

The following describes in detail the passive acceptance solution of the UPF.

In an optional example, S220 includes:
The UPF receives second control plane information from the SMF, where the second control plane information is used to indicate the first data connection.

The second control plane information includes indication information and at least one of the following terminal information:
an ID of the terminal, an IP address of the terminal, IDs of the plurality of data connections in S210, TEIDs of the plurality of data connections, and the indication information, where the indication information is used to indicate whether the multicast data is transmitted through a data connection for transmitting the terminal information.

The second control plane information may be the session establishment/modification request in FIG. 3, or may be control plane information after a session is established.

For example, as shown in FIG. 1, the UPF establishes a session 1 with UE 1, establishes a session 2 with UE 2, and establishes a session 3 with UE 3. The SMF may send, to the UPF by using the session establishment/modification request, second control plane information that indicates the session 1 and the session 3, or may send, to the UPF by using the session establishment/modification request, second control plane information that indicates the session 2 and the session 3. After receiving the second control plane information, the UPF sends the multicast data by using the session indicated by the second control plane information, and does not need to select a session. This alleviates load of the UPF.

Similar to the active selection solution of the UPF, in the passive selection solution of the UPF, before receiving the second control plane information, the UPF may send the request information or the user plane information to the SMF.

In a possible implementation, before the UPF receives the second control plane information from the SMF, the method 200 further includes:
The UPF sends second request information to the SMF, where the second request information is used to request to obtain identification information of a data connection for transmitting the multicast data.

The UPF may send the second request information after receiving the multicast data, or may send the second request information after receiving the IGMP message. The identification information of the data connection is, for example, the terminal information described above.

For example, as shown in FIG. 4, the UPF establishes the PDU session with each of UE 1, UE 2, and UE 3, that is, a session 1, a session 2, and a session 3. After receiving IGMP messages (each carrying a multicast address) by using the session 1, the session 2, and the session 3, the UPF may request to obtain identification information of a session corresponding to the multicast address.

For another example, as shown in FIG. 4, after receiving multicast data (carrying a multicast address), the UPF may request to obtain identification information of a session corresponding to the multicast address.

The SMF sends the second control plane information to the UPF based on the second request information.

In a possible implementation, before the UPF receives the second control plane information from the SMF, the method 200 further includes:
The UPF sends first user plane information to the SMF, where the first user plane information is used to request to receive the multicast data.

The first user plane information is, for example, an IGMP message. After receiving the IGMP message, the UPF forwards the IGMP message to the SMF, and triggers the SMF to send the second control plane information (namely, the terminal information) to the UPF.

For example, as shown in FIG. 4, the UPF establishes a PDU session with each of UE 1, UE 2, and UE 3, that is, a session 1, a session 2, and a session 3. After receiving IGMP messages by using the session 1, the session 2, and the session 3, the UPF forwards the IGMP message to the SMF. The SMF determines, based on the IGMP message, that the UPF needs to forward the multicast data, and sends the first control plane information (namely, the terminal information) to the UPF.

In the method 200, if the first data connection cannot transmit data any longer, for example, the first data connection is deleted or deactivated, the UPF needs to re-determine a data connection used to transmit the multicast data. FIG. 8 shows a process of releasing the data connection.

S810. UE (for example, UE 1) sends a PDU session release request (PDU session release request) to the AMF, to request to release a session 1.

S820. After receiving the PDU session release request, the AMF may send an update session management context (update SM context) message to the SMF, to indicate, by using the update session management context message, the SMF to update a context of the session 1.

S830. The SMF determines, based on a policy indicated by a policy control function (policy control function, PCF), to delete the session 1 or deactivate the session 1. If the PCF indicates session management policy termination (session management policy termination), the SMF determines to delete the session 1.

S840. The SMF sends a session release request (session release request) to the UPF, to request to delete the session 1.

S850. The UPF sends a session release response (session release response) to the SMF.

In S820, the SMF may detect that the session 1 cannot transmit data any longer, and the SMF may indicate, by using the "session release request", to transmit the multicast data by using a session 2. To be specific, the UPF sends, to the UPF, the "session release request" that includes an identifier of the session 2. Alternatively, the SMF may not indicate the UPF to transmit the multicast data by using the session 2, but indicates the UPF to select another session of an AN 1 to transmit the multicast data.

In addition, based on the method 200, this application further provides a charging method. In other words, the method 200 further includes:
The UPF receives first user plane information, where the first user plane information is used to request to receive the multicast data.

The UPF counts a data volume of the multicast data based on the first user plane information.

The first user plane information is, for example, an IGMP message. FIG. 1 is used as an example. After receiving an IGMP message sent by UE 1, the UPF determines that the UE 1 joins a multicast group, and counts a data volume of multicast data sent to the UE 1.

For example, both the UE 1 and UE 2 are located in a same multicast group, and a data volume of multicast data sent by the UPF to an AN 1 by using a session 2 (a data connection between the UE 2 and the UPF) is 1 M (M). In this case, the UPF determines that a data volume used by the UE 1 is 1 M, and the UPF determines that a data volume used by the UE 2 is 1 M.

Although the UPF does not send the multicast data by using the session 1 (a data connection between the UE 1 and the UPF), by using the foregoing method, the UPF can still determine the data volume of the multicast data received by the UE 1, and a charging network element in a communications system may perform charging based on the data volume counted by the UPF. This reduces redundant multicast data transmitted in the core network and avoids impact on a charging function of the communications system.

The foregoing mainly describes in detail the method for sending multicast data provided in this application from a perspective of a core network user plane network element (namely, the UPF). The following describes a method for sending multicast data provided in this application from a perspective of a core network control plane network element (for example, the SMF).

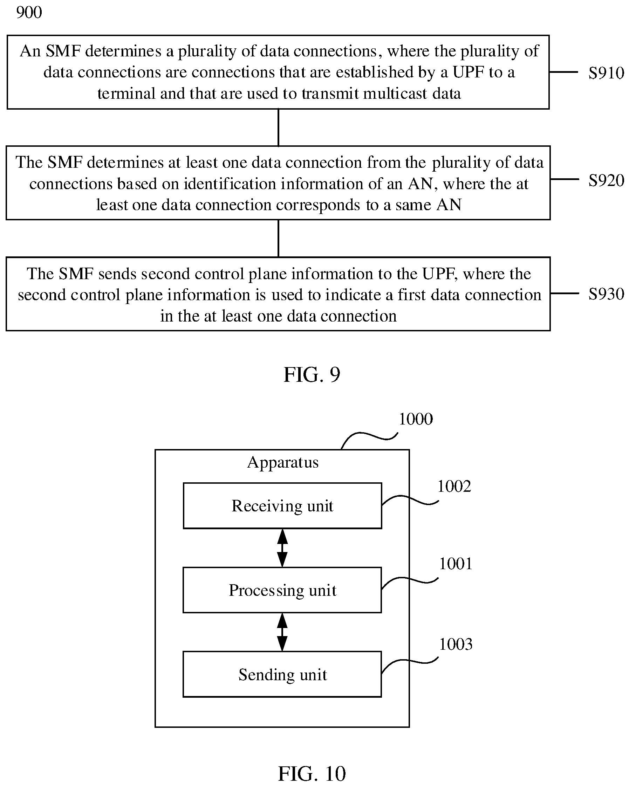

As shown in FIG. 9, the method 900 includes the following steps.

S910. The SMF determines a plurality of data connections, where the plurality of data connections are connections that are established between the UPF and a terminal and that are used to transmit multicast data.

S920. The SMF determines, based on identification information of an AN, at least one data connection from the plurality of data connections, where the at least one data connection corresponds to a same AN.

S930. The SMF sends second control plane information to the UPF, where the second control plane information is used to indicate a first data connection in the at least one data connection.

A person skilled in the art may understand that the SMF may determine the plurality of data connections by using the procedure shown in FIG. 3, and determine the first data connection according to a method similar to the method for determining the first data connection by the UPF in the method 200.

For example, the SMF may determine the first data connection from the at least one data connection according to the following rules:
a random policy, a preset policy, QoS, or the 1st connection that is in the at least one data connection and through which the terminal requests to receive the multicast data.

The foregoing solution is described in detail in the method 200. For brevity, details are not described herein again.

Therefore, in the method 900, the SMF indicates the UPF to send the multicast data to the terminal through a part of the plurality of data connections. This reduces redundant multicast data transmitted in a core network, so that a waste of transmission resources is avoided.

In the method 900, similarly, when the first data connection is deleted or deactivated, the SMF may re-determine a data connection used to transmit the multicast data. Alternatively, the SMF may receive first user plane information (for example, an IGMP message), and count, based on the first user plane information, a data volume of multicast data received by each terminal.

The foregoing describes in detail an example of the method for sending multicast data provided in this application. It may be understood that, to implement the foregoing functions, a communications apparatus includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the communications apparatus may be divided into functional units based on the foregoing method example. For example, each function may be obtained through division based on each functional unit, or two or more functions may be integrated into one processing unit. The integrated unit may be implemented in a form of hardware, or may be implemented in a form of a software functional unit. It should be noted that, division into units in this application is an example, and is merely logical function division. During actual implementation, another division manner may be used.

When an integrated unit is used, FIG. 10 is a possible schematic structural diagram of an apparatus for sending multicast data according to this application. The apparatus 1000 includes a processing unit 1001, a receiving unit 1002, and a sending unit 1003. The processing unit 1001 is configured to control the apparatus 1000 to perform the steps in the method shown in FIG. 2. The processing unit 1001 may be further configured to perform another process of the technology described in this specification. The apparatus 1000 may further include a storage unit, configured to store program code and data that are of the apparatus 1000.

For example, the processing unit 1001 is configured to: establish a plurality of data connections to a terminal, and determine a first data connection, where the plurality of data connections include the first data connection.

The processing unit 1001 is further configured to control the receiving unit 1002 to receive multicast data sent to the terminal.

The processing unit 1001 is further configured to control the sending unit 1003 to send the multicast data to an access network element through the first data connection.

The processing unit 1001 may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processing unit 1001 may implement or execute various example logical blocks, modules, and circuits described with reference to content disclosed in this application. The processor may alternatively be a combination of processors implementing a computing function, for example, a combination of one or more microprocessors or a combination of a DSP and a microprocessor. The sending unit 1002 and the receiving unit 1003 are, for example, a communications interface, and the storage unit may be a memory.

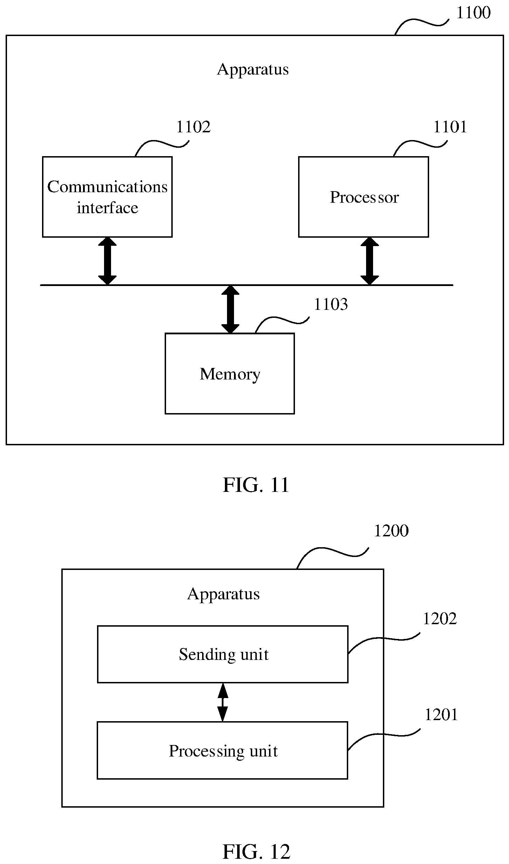

When the processing unit 1001 is a processor, the sending unit 1002 and the receiving unit 1003 are a communications interface, and the storage unit is a memory, the apparatus for sending multicast data in this application may be an apparatus shown in FIG. 11.

Referring to FIG. 11, the apparatus 1100 includes a processor 1101, a communications interface 1102, and a memory 1103 (optional). The processor 1101, the communications interface 1102, and the memory 1103 may communicate with each other through an internal connection path, to transfer a control signal and/or a data signal.

It may be clearly understood by a person skilled in the art that, for the purpose of convenient and brief description, for a detailed working process of the foregoing apparatus and units, refer to a corresponding process in the foregoing method embodiments, and details are not described herein again.

The apparatus for sending multicast data provided in this application sends multicast data to a terminal through a part of a plurality of data connections. This reduces redundant multicast data transmitted in a core network, so that a waste of transmission resources is avoided.

When an integrated unit is used, FIG. 12 is a possible schematic structural diagram of an apparatus for sending multicast data according to this application. The apparatus 1200 includes a processing unit 1201 and a sending unit 1202. The processing unit 1201 is configured to control the apparatus 1200 to perform the steps in the method shown in FIG. 9. The processing unit 1201 may be further configured to perform another process of the technology described in this specification. The apparatus 1200 may further include a storage unit, configured to store program code and data that are of the apparatus 1200.

For example, the processing unit 1201 is configured to: determine a plurality of data connections, where the plurality of data connections are connections that are established between a core network user plane network element and a terminal and that are used to transmit multicast data; and determine, based on identification information of an access network element, at least one data connection from the plurality of data connections, where the at least one data connection corresponds to a same access network element.

The processing unit 1201 is further configured to control the sending unit 1202 to send second control plane information to the core network user plane network element, where the second control plane information is used to indicate a first data connection in the at least one data connection.

The processing unit 1201 may be a processor or a controller, for example, may be a CPU, a general-purpose processor, a DSP, an ASIC, an FPGA or another programmable logic device, a transistor logic device, a hardware component, or any combination thereof. The processing unit 1201 may implement or execute various example logical blocks, modules, and circuits described with reference to content disclosed in this application. The processor may alternatively be a combination of processors implementing a computing function, for example, a combination of one or more microprocessors or a combination of a DSP and a microprocessor. The sending unit 1202 is, for example, a communications interface, and the storage unit may be a memory.

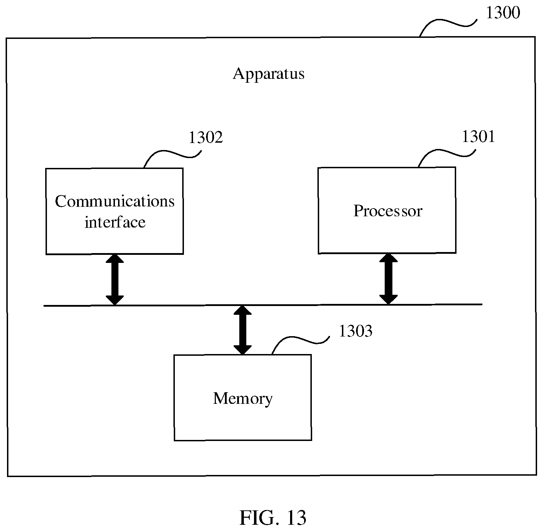

When the processing unit 1201 is a processor, the sending unit 1202 is a communications interface, and the storage unit is a memory, the apparatus for sending multicast data in this application may be an apparatus shown in FIG. 13.

Referring to FIG. 13, the apparatus 1300 includes a processor 1301, a communications interface 1302, and a memory 1303 (optional). The processor 1301, the communications interface 1302, and the memory 1303 may communicate with each other through an internal connection path, to transfer a control signal and/or a data signal.

It may be clearly understood by a person skilled in the art that, for the purpose of convenient and brief description, for a detailed working process of the foregoing apparatus and units, refer to a corresponding process in the foregoing method embodiments, and details are not described herein again.

The apparatus for sending multicast data provided in this application indicates a core network user plane network element (for example, a UPF) to send multicast data to a terminal through a part of a plurality of data connections. This reduces redundant multicast data transmitted in a core network, so that a waste of transmission resources is avoided.

The foregoing apparatus embodiments completely correspond to the method embodiments. For example, a communications interface performs a receiving step and a sending step in the method embodiments, and all steps other than the receiving step and the sending step may be performed by a processing unit or a processor. For a function of a specific unit, refer to a corresponding method embodiment. Details are not described herein again.

It should be understood that sequence numbers of the foregoing processes do not mean an execution sequence in the embodiments of this application. The execution sequence of the processes should be determined based on functions and internal logic of the processes, and should not be construed as any limitation on the implementation processes of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Components in the apparatuses in FIG. 10 to FIG. 13 of this application are communicatively connected. To be specific, a processing unit (or a processor), a storage unit (or a memory), and a transceiver unit (a communications interface) communicate with each other through an internal connection path, to transfer a control signal and/or a data signal. The foregoing method embodiments of this application may be used in a processor, or the processor implements the steps in the foregoing method embodiments. The processor may be an integrated circuit chip and has a signal processing capability. In an implementation process, steps in the foregoing method embodiments can be implemented by using a hardware integrated logical circuit in the processor, or by using instructions in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in this application. The general-purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory or a register. The storage medium is located in a memory, and the processor reads information in the memory and implements the steps in the foregoing methods in combination with hardware of the processor. Although only one processor is shown in the figure, the apparatus may include a plurality of processors, or the processor includes a plurality of processing units. Specifically, the processor may be a single-core (single-CPU) processor, or may be a multi-core (multi-CPU) processor.

The memory is configured to store a computer instruction executed by the processor. The memory may be a storage circuit or a memory. The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. The memory may be independent of the processor, or may be a storage unit in the processor. This is not limited herein. Although only one memory is shown in the figure, the apparatus may alternatively include a plurality of memories, or the memory includes a plurality of storage units.

A communications interface is configured to implement content exchange between the processor and another unit or network element. The communications interface may be a transceiver circuit or a communications unit, or may be a transceiver. Alternatively, the communications interface may be a communications interface or a transceiver circuit of the processor. Optionally, the communications interface may be a transceiver chip. The communications interface may further include a sending unit and/or a receiving unit.

In a possible implementation, the processor, the memory, and the communications interface may be connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In embodiments of this application, the words such as "example" or "for example" are used to give an example, an illustration, or a description. Any embodiment or design solution described as "example" or "for example" in the embodiments of this application shall not be construed as being more preferred or more advantageous than another embodiment or design solution. Exactly, use of the words such as "example" or "for example" is intended to present a related concept in a specific manner.

In the embodiments of this application, for ease of understanding, a plurality of examples are used for description. However, these examples are merely examples, but this does not mean that these examples are optimal implementations for implementing this application.

In the embodiments of this application, for ease of description, a request message, a response message, and names of various other messages are used. However, these messages are merely used as examples to describe content that needs to be carried or functions that need to be implemented, and specific names of the messages are not intended to limit this application. For example, the messages may alternatively be a first message, a second message, a third message, or the like. These messages may be some specific messages, or may be some fields in the messages. These messages may alternatively represent various service operations.

The method or algorithm steps described with reference to the content disclosed in this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may alternatively be a component of the processor. The processor and the storage medium may be located in an ASIC.

All or some of the foregoing embodiments may be implemented by software, hardware, firmware, or any combination thereof. When software is used for implementation, all or some of the embodiments may be implemented in a form of computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

## Claims

1. A method (200) for sending multicast data, comprising:
establishing (S210), by a core network user plane network element, a plurality of data connections to a terminal, which may be one user equipment or a plurality of user equipments;
determining (S220), by the core network user plane network element, a first data connection, wherein the first data connection is a part of the plurality of data connections; and
receiving (S230), by the core network user plane network element, multicast data sent to the terminal;
**characterized in that** the method (200) further comprises:
sending (S240), by the core network user plane network element, the multicast data to an access network element only through the first data connection.

2. The method (200) according to claim 1, wherein the determining (S220), by the core network user plane network element, a first data connection comprises:
determining, by the core network user plane network element based on identification information of the access network element, at least one data connection established by the terminal through the access network element, wherein the plurality of data connections comprise the at least one data connection; and
determining, by the core network user plane network element, the first data connection from the at least one data connection.

3. The method (200) according to claim 2, wherein the determining, by the core network user plane network element, the first data connection from the at least one data connection comprises:
determining, by the core network user plane network element from the at least one data connection, that the 1st data connection through which the terminal requests to receive the multicast data is the first data connection.

4. The method (200) according to claim 2 or 3, wherein the method (200) further comprises:
when the first data connection is deleted or deactivated, re-determining, by the core network user plane network element from the at least one data connection, a data connection used to transmit the multicast data.

5. The method (200) according to any one of claims 2 to 4, wherein before the determining, by the core network user plane network element based on identification information of the access network element, at least one data connection established by the terminal through the access network element, the method (200) further comprises:
receiving, by the core network user plane network element, first control plane information from a core network control plane network element, wherein the first control plane information comprises the identification information of the access network element and at least one of the following terminal information:
an identifier ID of the terminal, an internet protocol IP address of the terminal, IDs of the plurality of data connections, and tunnel endpoint identifiers TEIDs of the plurality of data connections.

6. The method (200) according to claim 5, wherein before the receiving, by the core network user plane network element, first control plane information from a core network control plane network element, the method (200) further comprises:
sending, by the core network user plane network element, first request information to the core network control plane network element, wherein the first request information is used to request identification information of the data connection established through the access network element, or the first request information is used to request the identification information of the access network element.

7. The method (200) according to claim 5, wherein before the receiving, by the core network user plane network element, first control plane information from a core network control plane network element, the method (200) further comprises:
sending, by the core network user plane network element, first user plane information to the core network control plane network element, wherein the first user plane information is used to request to receive the multicast data.

8. The method (200) according to any one of claims 2 to 4, wherein before the determining, by the core network user plane network element based on identification information of the access network element, at least one data connection established by the terminal through the access network element, the method further comprises:
receiving, by the core network user plane network element, second user plane information from the access network element through the plurality of data connections, wherein the second user plane information comprises the identification information of the access network element.

9. The method (200) according to claim 1, wherein the determining (S220), by the core network user plane network element, a first data connection comprises:
receiving, by the core network user plane network element, second control plane information from a core network control plane network element, wherein the second control plane information is used to indicate the first data connection.

10. The method (200) according to claim 9, wherein before the receiving, by the core network user plane network element, second control plane information from a core network control plane network element, the method (200) further comprises:
sending, by the core network user plane network element, second request information to the core network control plane network element, wherein the second request information is used to request to obtain identification information of a data connection for transmitting the multicast data.

11. The method (200) according to claim 9, wherein before the receiving, by the core network user plane network element, second control plane information from a core network control plane network element, the method (200) further comprises:
sending, by the core network user plane network element, first user plane information to the core network control plane network element, wherein the first user plane information is used to request to receive the multicast data.

12. An apparatus (1000) for sending multicast data, comprising a processing unit (1001), a receiving unit (1002), and a sending unit (1003),
and being configured to implement the method (200) in accordance with any one of claims 1 to 11.

13. A communications apparatus (1100, 1300), comprising at least one processor (1101, 1301), wherein the at least one processor (1101, 1301) is configured to: be coupled to a memory (1103, 1303), and read and execute an instruction in the memory (1103, 1303), to implement the method (200) according to any one of claims 1 to 11.

14. A computer-readable storage medium, wherein the computer-readable storage medium stores a computer program; and when the computer program is run on a computer, the computer is enabled to perform the method (200) according to any one of claims 1 to 11.

15. A communications system, comprising the apparatus (1000) for sending multicast data according to claim 12.

## Patentansprüche

1. Verfahren (200) zum Senden von Multicast-Daten, umfassend:
Herstellen (S210), durch ein Kernnetzbenutzerebenennetzelement, einer Vielzahl von Datenverbindungen zu einem Endgerät, das eine Benutzereinrichtung oder eine Vielzahl von Benutzereinrichtungen sein kann;
Bestimmen (S220), durch das Kernnetzbenutzerebenennetzelement, einer ersten Datenverbindung, wobei die erste Datenverbindung ein Teil der Vielzahl von Datenverbindungen ist; und
Empfangen (S230), durch das Kernnetzbenutzerebenennetzelement, von Multicast-Daten, die an das Endgerät gesendet werden, **dadurch gekennzeichnet, dass** das Verfahren (200) ferner umfasst:
Senden (S240), durch das Kernnetzbenutzerebenennetzelement, der Multicast-Daten an ein Zugangsnetzelement nur durch die erste Datenverbindung.

2. Verfahren (200) nach Anspruch 1, wobei das Bestimmen (S220), durch das Kernnetzbenutzerebenennetzelement, einer ersten Datenverbindung umfasst:
Bestimmen, durch das Kernnetzbenutzerebenennetzelement basierend auf Identifikationsinformationen des Zugangsnetzelements, mindestens einer Datenverbindung, die durch das Endgerät durch das Zugangsnetzelement hergestellt wird, wobei die Vielzahl von Datenverbindungen die mindestens eine Datenverbindung umfasst; und
Bestimmen, durch das Kernnetzbenutzerebenennetzelement, der ersten Datenverbindung aus der mindestens einen Datenverbindung.

3. Verfahren (200) nach Anspruch 2, wobei das Bestimmen, durch das Kernnetzbenutzerebenennetzelement, der ersten Datenverbindung aus der mindestens einen Datenverbindung umfasst:
Bestimmen, durch das Kernnetzbenutzerebenennetzelement von der mindestens einen Datenverbindung, dass die 1. Datenverbindung, durch die das Endgerät anfordert, die Multicast-Daten zu empfangen, die erste Datenverbindung ist.

4. Verfahren (200) nach Anspruch 2 oder 3, wobei das Verfahren (200) ferner umfasst:
wenn die erste Datenverbindung gelöscht oder deaktiviert wird, erneutes Bestimmen, durch das Kernnetzbenutzerebenennetzelement von der mindestens einen Datenverbindung, einer Datenverbindung, die verwendet wird, um die Multicast-Daten zu übertragen.

5. Verfahren (200) nach einem der Ansprüche 2 bis 4, wobei vor dem Bestimmen, durch das Kernnetzbenutzerebenennetzelement basierend auf Identifikationsinformationen des Zugangsnetzelements, mindestens einer Datenverbindung, die durch das Endgerät durch das Zugangsnetzelement hergestellt wird, das Verfahren (200) ferner umfasst:
Empfangen, durch das Kernnetzbenutzerebenennetzelement, erster Steuerungsebeneninformationen von einem Kernnetzsteuerungsebenennetzelement, wobei die ersten Steuerungsebeneninformationen die Identifikationsinformationen des Zugangsnetzelements und mindestens eine der folgenden Endgerätinformationen umfassen:
einer Bezeichner-ID des Endgeräts, einer Internetprotokoll(IP)-Adresse des Endgeräts, IDs der Vielzahl von Datenverbindungen und Tunnelendpunktbezeichnern (tunnel endpoint identifiers - TEIDs) der Vielzahl von Datenverbindungen.

6. Verfahren (200) nach Anspruch 5, wobei vor dem Empfangen, durch das Kernnetzbenutzerebenennetzelement, erster Steuerungsebeneninformationen von einem Kernnetzsteuerungsebenennetzelement, das Verfahren (200) ferner umfasst:
Senden, durch das Kernnetzbenutzerebenennetzelement, erster Anforderungsinformationen an das Kernnetzsteuerungsebenennetzelement, wobei die ersten Anforderungsinformationen verwendet werden, um Identifikationsinformationen der Datenverbindung anzufordern, die durch das Zugangsnetzelement hergestellt wird, oder die ersten Anforderungsinformationen verwendet werden, um die Identifikationsinformationen des Zugangsnetzelements anzufordern.

7. Verfahren (200) nach Anspruch 5, wobei vor dem Empfangen, durch das Kernnetzbenutzerebenennetzelement, erster Steuerungsebeneninformationen von einem Kernnetzsteuerungsebenennetzelement, das Verfahren (200) ferner umfasst:
Senden, durch das Kernnetzbenutzerebenennetzelement, erster Benutzerebeneninformationen an das Kernnetzsteuerungsebenennetzelement, wobei die ersten Benutzerebeneninformationen verwendet werden, um anzufordern, die Multicast-Daten zu empfangen.

8. Verfahren (200) nach einem der Ansprüche 2 bis 4, wobei vor dem Bestimmen, durch das Kernnetzbenutzerebenennetzelement basierend auf Identifikationsinformationen des Zugangsnetzelements, mindestens einer Datenverbindung, die durch das Endgerät durch das Zugangsnetzelement hergestellt wird, das Verfahren ferner umfasst:
Empfangen, durch das Kernnetzbenutzerebenennetzelement, zweiter Benutzerebeneninformationen von dem Zugangsnetzelement durch die Vielzahl von Datenverbindungen, wobei die zweiten Benutzerebeneninformationen die Identifikationsinformationen des Zugangsnetzelements umfassen.

9. Verfahren (200) nach Anspruch 1, wobei das Bestimmen (S220), durch das Kernnetzbenutzerebenennetzelement, einer ersten Datenverbindung umfasst:
Empfangen, durch das Kernnetzbenutzerebenennetzelement, zweiter Steuerungsebeneninformationen von einem Kernnetzsteuerungsebenennetzelement, wobei die zweiten Steuerungsebeneninformationen verwendet werden, um die erste Datenverbindung anzugeben.

10. Verfahren (200) nach Anspruch 9, wobei vor dem Empfangen, durch das Kernnetzbenutzerebenennetzelement, zweiter Steuerungsebeneninformationen von einem Kernnetzsteuerungsebenennetzelement, das Verfahren (200) ferner umfasst:
Senden, durch das Kernnetzbenutzerebenennetzelement, zweiter Anforderungsinformationen an das Kernnetzbenutzerebenennetzelement, wobei die zweiten Anforderungsinformationen verwendet werden, um anzufordern, Identifikationsinformationen einer Datenverbindung zum Übertragen der Multicast-Daten zu erhalten.

11. Verfahren (200) nach Anspruch 9, wobei vor dem Empfangen, durch das Kernnetzbenutzerebenennetzelement, zweiter Steuerungsebeneninformationen von einem Kernnetzsteuerungsebenennetzelement, das Verfahren (200) ferner umfasst:
Senden, durch das Kernnetzbenutzerebenennetzelement, erster Benutzerebeneninformationen an das Kernnetzsteuerungsebenennetzelement, wobei die ersten Benutzerebeneninformationen verwendet werden, um anzufordern, die Multicast-Daten zu empfangen.

12. Einrichtung (1000) zum Senden von Multicast-Daten, umfassend eine Verarbeitungseinheit (1001), eine Empfangseinheit (1002) und eine Sendeeinheit (1003),
und die konfiguriert ist, um das Verfahren (200) gemäß einem der Ansprüche 1 bis 11 zu implementieren.

13. Kommunikationseinrichtung (1100, 1300), umfassend mindestens einen Prozessor (1101, 1301), wobei der mindestens eine Prozessor (1101, 1301) konfiguriert ist, um: mit einem Speicher (1103, 1303) gekoppelt zu sein, und eine Anweisung in dem Speicher (1103, 1303) zu lesen und auszuführen, um das Verfahren (200) nach einem der Ansprüche 1 bis 11 zu implementieren.

14. Computerlesbares Speichermedium, wobei das computerlesbare Speichermedium ein Computerprogramm speichert, und, wenn das Computerprogramm auf einem Computer abläuft, der Computer aktiviert wird, um das Verfahren (200) nach einem der Ansprüche 1 bis 11 durchzuführen.

15. Kommunikationssystem, umfassend die Einrichtung (1000) zum Senden von Multicast-Daten nach Anspruch 12.

## Revendications

1. Procédé (200) d'envoi de données de multidiffusion, comprenant :
l'établissement (S210), par un élément de réseau de plan d'utilisateur de réseau central, d'une pluralité de connexions de données à un terminal, qui peut être un équipement utilisateur ou une pluralité d'équipements utilisateurs ;
la détermination (S220), par l'élément de réseau de plan d'utilisateur de réseau central, d'une première connexion de données, la première connexion de données faisant partie de la pluralité de connexions de données ; et
la réception (S230), par l'élément de réseau de plan d'utilisateur de réseau central, des données de multidiffusion envoyées au terminal ;
**caractérisé en ce que** le procédé (200) comprend en outre :
l'envoi (S240), par l'élément de réseau de plan d'utilisateur de réseau central, des données de multidiffusion à un élément de réseau d'accès uniquement par l'intermédiaire de la première connexion de données.

2. Procédé (200) selon la revendication 1, la détermination (S220), par l'élément de réseau de plan d'utilisateur de réseau central, d'une première connexion de données comprenant :
la détermination, par l'élément de réseau de plan d'utilisateur de réseau central en fonction des informations d'identification de l'élément de réseau d'accès, d'au moins une connexion de données établie par le terminal par l'intermédiaire de l'élément de réseau d'accès, la pluralité de connexions de données comprenant l'au moins une connexion de données ; et
la détermination, par l'élément de réseau de plan d'utilisateur de réseau central, de la première connexion de données à partir de l'au moins une connexion de données.

3. Procédé (200) selon la revendication 2, la détermination, par l'élément de réseau de plan d'utilisateur de réseau central, de la première connexion de données à partir de l'au moins une connexion de données comprenant :
la détermination, par l'élément de réseau de plan d'utilisateur de réseau central à partir de l'au moins une connexion de données, du fait que la première connexion de données par l'intermédiaire de laquelle le terminal demande à recevoir les données de multidiffusion est la première connexion de données.

4. Procédé (200) selon la revendication 2 ou 3, le procédé (200) comprenant en outre :
lorsque la première connexion de données est supprimée ou désactivée, la redétermination, par l'élément de réseau de plan d'utilisateur de réseau central à partir de l'au moins une connexion de données, d'une connexion de données utilisée pour transmettre les données de multidiffusion.

5. Procédé (200) selon l'une quelconque des revendications 2 à 4, avant la détermination, par l'élément de réseau de plan d'utilisateur de réseau central en fonction des informations d'identification de l'élément de réseau d'accès, d'au moins une connexion de données établie par le terminal par l'intermédiaire de l'élément de réseau d'accès, le procédé (200) comprenant en outre :
la réception, par l'élément de réseau de plan d'utilisateur de réseau central, des premières informations de plan de commande à partir d'un élément de réseau de plan de commande de réseau central, les premières informations de plan de commande comprenant les informations d'identification de l'élément de réseau d'accès et au moins l'une des informations de terminal suivantes :
un identifiant ID du terminal, une adresse IP de protocole Internet du terminal, des identifiants de la pluralité de connexions de données et des identifiants de point d'extrémité de tunnel TEID de la pluralité de connexions de données.

6. Procédé (200) selon la revendication 5, avant la réception, par l'élément de réseau de plan d'utilisateur de réseau central, des premières informations de plan de commande à partir d'un élément de réseau de plan de commande de réseau central, le procédé (200) comprenant en outre :
l'envoi, par l'élément de réseau de plan d'utilisateur de réseau central, des premières informations de demande à l'élément de réseau de plan de commande de réseau central, les premières informations de demande étant utilisées pour demander des informations d'identification de la connexion de données établie par l'intermédiaire de l'élément de réseau d'accès, ou les premières informations de demande étant utilisées pour demander les informations d'identification de l'élément de réseau d'accès.

7. Procédé (200) selon la revendication 5, avant la réception, par l'élément de réseau de plan d'utilisateur de réseau central, des premières informations de plan de commande à partir d'un élément de réseau de plan de commande de réseau central, le procédé (200) comprenant en outre :
l'envoi, par l'élément de réseau de plan d'utilisateur de réseau central, des premières informations de plan d'utilisateur à l'élément de réseau de plan de commande de réseau central, les premières informations de plan d'utilisateur étant utilisées pour demander la réception des données de multidiffusion.

8. Procédé (200) selon l'une quelconque des revendications 2 à 4, avant la détermination, par l'élément de réseau de plan d'utilisateur de réseau central en fonction des informations d'identification de l'élément de réseau d'accès, d'au moins une connexion de données établie par le terminal par l'intermédiaire de l'élément de réseau d'accès, le procédé comprenant en outre :
la réception, par l'élément de réseau de plan d'utilisateur de réseau central, des secondes informations de plan d'utilisateur de l'élément de réseau d'accès par l'intermédiaire de la pluralité de connexions de données, les secondes informations de plan d'utilisateur comprenant les informations d'identification de l'élément de réseau d'accès.

9. Procédé (200) selon la revendication 1, la détermination (S220), par l'élément de réseau de plan d'utilisateur de réseau central, d'une première connexion de données comprenant :
la réception, par l'élément de réseau de plan d'utilisateur de réseau central, des secondes informations de plan de commande à partir d'un élément de réseau de plan de commande de réseau central, les secondes informations de plan de commande étant utilisées pour indiquer la première connexion de données.

10. Procédé (200) selon la revendication 9, avant la réception, par l'élément de réseau de plan d'utilisateur de réseau central, des secondes informations de plan de commande à partir d'un élément de réseau de plan de commande de réseau central, le procédé (200) comprenant en outre :
l'envoi, par l'élément de réseau de plan d'utilisateur de réseau central, des secondes informations de demande à l'élément de réseau de plan de commande de réseau central, les secondes informations de demande étant utilisées pour demander l'obtention d'informations d'identification d'une connexion de données pour transmettre les données de multidiffusion.

11. Procédé (200) selon la revendication 9, avant la réception, par l'élément de réseau de plan d'utilisateur de réseau central, des secondes informations de plan de commande à partir d'un élément de réseau de plan de commande de réseau central, le procédé (200) comprenant en outre :
l'envoi, par l'élément de réseau de plan d'utilisateur de réseau central, de premières informations de plan d'utilisateur à l'élément de réseau de plan de commande de réseau central, les premières informations de plan d'utilisateur étant utilisées pour demander la réception des données de multidiffusion.

12. Appareil (1000) destiné à l'envoi de données de multidiffusion, comprenant une unité de traitement (1001), une unité de réception (1002) et une unité d'envoi (1003),
et étant configuré pour mettre en œuvre le procédé (200) selon l'une quelconque des revendications 1 à 11.

13. Appareil de communication (1100, 1300), comprenant au moins un processeur (1101, 1301), l'au moins un processeur (1101, 1301) est configuré pour : être couplé à une mémoire (1103, 1303), et lire et exécuter une instruction dans la mémoire (1103, 1303), pour mettre en œuvre le procédé (200) selon l'une quelconque des revendications 1 à 11.

14. Support de stockage lisible par ordinateur, le support de stockage lisible par ordinateur stockant un programme informatique, et lorsque le programme informatique est réalisé sur un ordinateur, l'ordinateur étant en mesure d'effectuer le procédé (200) selon l'une quelconque des revendications 1 à 11.

15. Système de communications, comprenant l'appareil (1000) destiné à l'envoi de données de multidiffusion selon la revendication 12.
